# EUROPEAN PATENT APPLICATION

(11) **EP 4 729 397 A1**
(43) Date of publication of application: **22.04.2026**
(21) Application number: 24823581.4
(22) Date of filing: 08.05.2024
(51) Int. Cl.: B62D 25/02, B62D 29/00, B62D 27/02

(54) **SIDE SILL FOR VEHICLE**

(30) Priority: 15.06.2023 KR 20230076800
(71) Applicant: POSCO Co., Ltd, Pohang-si, Gyeongsangbuk-do 37859 (KR)
(72) Inventor: LEE, Gyu-Min, Incheon 21985 (KR)
(74) Representative: Meissner Bolte Partnerschaft mbB
(86) International application number: PCT/KR2024/006184
(87) International publication number: WO 2024/258060

(57) **Abstract**

The present invention provides a side sill for a vehicle, the side sill comprising: an inner panel; an outer panel which is coupled to the inner panel in the width direction and forms a hollow part together with the inner panel; and a reinforcement frame which is arranged in the hollow part and in which a plurality of unit reinforcement bodies having shapes corresponding to each other are connected in the longitudinal direction.

## Description

### Technical Field

The present disclosure relates to a side sill for a vehicle.

### Background Art

It should be noted that the statements in this section merely provide background information related to the present disclosure and do not constitute prior art.

Generally, during a vehicle side crash, stress concentration in a lower portion of a vehicle body, i.e., the side sill, causes severe deformation in this region, which, in turn, leads to an increased intrusion of the side sill into the interior, so that the risk of injury to the pelvis of a passenger, among other injuries, is found to be significantly increased.

Since side sills generally enclose the entire passenger compartment, they are significantly long in the length direction. Furthermore, to enhance the crash absorption capability of side sills, ultra-high-strength materials or thick materials are used for components, such as reinforcing elements.

When reinforcing elements, such as protrusions, are applied to such large components to ensure high rigidity, the manufacturing of such large components requires high forming loads.

Large component manufacturers possess equipment, such as large presses capable of applying high forming loads. However, small component manufacturers or countries with underdeveloped industrial bases are unable to apply high forming loads, resulting in difficulties in forming these parts.

(Patent Document 1) KR 20-1998-0043143 U

### Disclosure of Invention

### Technical Problem

An aspect of the present disclosure is to provide a side sill which may be formed in product even under a low forming load.

Another aspect of the present disclosure is to provide a side sill in which cross-sections of the same pattern are repeated in the length direction, thereby reducing mold manufacturing costs.

### Solution to Problem

According to an aspect of the present disclosure, a side sill for a vehicle includes: an inner panel; an outer panel joined to the inner panel in a width direction to form a hollow portion together with the inner panel; and a reinforcing frame disposed in the hollow portion and in which a plurality of unit reinforcing bodies having corresponding shapes are connected in a length direction.

The side sill for vehicle of the present invention can form a product even under low forming load.

The unit reinforcing body may be joined to the inner panel to form a closed cross-section.

The unit reinforcing body may be manufactured integrally by forming a single steel plate.

The unit reinforcing body may be manufactured by forming a single steel plate having tensile strength of 780 MPa or more.

The unit reinforcing body may include an uneven portion in a length-directional cross-section.

The uneven portion may have a protruding surface and an indented surface alternately formed in the length direction, and an inclined surface may be formed between the protruding surface and the indented surface.

At least one of the plurality of unit reinforcing bodies of the reinforcing frame connected in the length direction may have a different steel grade or tensile strength.

Two unit reinforcing bodies connected in the length direction in the reinforcing frame may be welded with length-directional end portions facing each other.

The reinforcing frame may have an overlapping region in which two unit reinforcing bodies connected in the length direction overlap each other in a thickness direction and may be welded in the overlapping region.

The unit reinforcing body may include: a first unit reinforcing body having one side joined to the inner panel to form a first closed cross-section; and a second unit reinforcing body having one side joined to the first unit reinforcing body to form a second closed cross-section, the reinforcing frame may include a first overlapping region in which two first unit reinforcing bodies connected in the length direction overlap in the thickness direction; and a second overlapping region in which two second unit reinforcing bodies connected in the length direction overlap in the thickness direction, and the first overlapping region and the second overlapping region may be disposed at positions corresponding to each other in the length direction.

In a portion in which the first overlapping region and the second overlapping region overlap, the two first unit reinforcing bodies of the first overlapping region and the two second unit reinforcing bodies of the second overlapping region may be welded in a four-layered state.

The unit reinforcing body may include: a first unit reinforcing body having one side joined to the inner panel to form a first closed cross-section; and a second unit reinforcing body having one side joined to the first unit reinforcing body to form a second closed cross-section, the reinforcing frame may include: a first overlapping region in which two first unit reinforcing bodies connected in the length direction overlap in the thickness direction; and a second overlapping region in which two second unit reinforcing bodies connected in the length direction overlap in the thickness direction, and the first overlapping region and the second overlapping region may be disposed to stagger in the length direction.

In a portion in which the second unit reinforcing body overlaps the first overlapping region, two first unit reinforcing bodies and one second unit reinforcing body in the first overlapping region may be welded in a three-layered state.

In a portion in which the second overlapping region overlaps the first unit reinforcing body, two second unit reinforcing bodies and the first unit reinforcing body in the second overlapping region may be welded in a three-layered state.

The unit reinforcing body may include: a first unit reinforcing body having one side joined to the inner panel to form a first closed cross-section; and a second unit reinforcing body having one side joined to the first unit reinforcing body to form a second closed cross-section.

The first unit reinforcing body may have a bending point protruding outwardly from the first closed cross-section.

The first unit reinforcing body may have a bending point protruding outwardly from the first closed cross-section, and the bending point of the first unit reinforcing body may be formed at a position spaced apart from a first inner surface of the inner panel by a distance of 30 to 70% of an installation width of the first unit reinforcing body.

The first unit reinforcing body may include: a first section extending toward a first inner surface of the inner panel with the bending point as a boundary; and a second section bent based on the bending point as a boundary to extend toward a second inner surface of the outer panel and forming a bending angle with the first section within the first closed cross-section, and the bending angle in the first unit reinforcing body may be formed within the first closed cross-section and may be in the range of 165 to 175 degrees.

The inner panel may be manufactured integrally by forming a single steel plate.

The outer panel may be manufactured integrally by forming a single steel plate.

According to another aspect of the present disclosure, a method for manufacturing a side sill for a vehicle includes: a component preparation operation of preparing an inner panel, a plurality of unit reinforcing bodies, and an outer panel; a reinforcing frame manufacturing operation of manufacturing a reinforcing frame by connecting the plurality of unit reinforcing bodies in a length direction; a reinforcing frame joining operation of joining the reinforcing frame to the inner panel; and an outer panel joining operation of joining the outer panel to the inner panel to form a hollow portion and disposing the reinforcing frame within the hollow portion. Advantageous Effects of Invention

According to an embodiment of the present disclosure, a product may be molded even under a low forming load.

According to an embodiment of the present disclosure, the cross-sections of the same pattern are repeated in the length direction, thereby reducing mold manufacturing costs.

### Brief Description of Drawings

FIG. 1 is a perspective view of a side sill for a vehicle of comparative example, compared to a side sill for a vehicle of the present disclosure.
FIG. 2 is a perspective view of a reinforcing frame of the side sill for a vehicle of the comparative example of FIG. 1.
FIG. 3 is a perspective view of a side sill for a vehicle according to a first embodiment of the present disclosure.
FIG. 4 is a perspective view of a reinforcing frame of the side sill for a vehicle of the first embodiment of FIG. 3.
FIG. 5 is a perspective view illustrating an enlarged detail of portion 'A' of FIG. 4.
FIG. 6 is a cross-sectional view taken along line I-I' of FIG. 3.
FIG. 7 is a drawing illustrating a position of a bending point of the side sill for a vehicle of the first embodiment of FIG. 3.
FIG. 8 is a perspective view of a side sill for a vehicle according to a second embodiment of the present disclosure.
FIG. 9 is a perspective view of a reinforcing frame of the side sill for a vehicle of the second embodiment of FIG. 8.
FIG. 10 is a perspective view illustrating an enlarged detail of portion 'B' of FIG. 9.
FIG. 11 is a cross-sectional view taken along line II-II' of FIG. 9.
FIG. 12 is a perspective view of a reinforcing frame of a side sill for a vehicle included in a third embodiment of the present disclosure.
FIG. 13 is a perspective view illustrating an enlarged detail of portion 'C' of FIG. 12.
FIG. 14 is a cross-sectional view taken along line III-III' of FIG. 13.
FIG. 15 is a perspective view illustrating an enlarged detail of portion 'D' of FIG. 12.
FIG. 16 is a cross-sectional view taken along line IV-IV' of FIG. 15.
FIGS. 17a through 17c are drawings illustrating deformation analysis results of the side sill for a vehicle of the second embodiment of FIG. 8.
FIGS. 18a through 18c are drawings illustrating deformation analysis results of the side sill for a vehicle of the comparative example of FIG. 1.
FIG. 19 is a load-displacement diagram of the side sill for a vehicle of the comparative example of FIG. 1 and the side sill for a vehicle of the second embodiment of FIG. 8.

### Best Mode for the Invention

Hereinafter, embodiments of the present disclosure will be described with reference to the accompanying drawings. However, the embodiments of the present disclosure may be modified in various other forms, and the scope of the present disclosure is not limited to the embodiments described below. In addition, the embodiments of the present disclosure are provided to more completely describe the present disclosure to those skilled in the art. The shapes and sizes of elements in the drawings may be exaggerated for a clearer description.

Referring to the drawings, although a side sill for a vehicle of the present disclosure is illustrated in the left-right, up-down, and front-rear directions and the terms left-right, up-down, and front-rear directions are used throughout the detailed description of the disclosure, these terms are for convenience of description, and it should be noted that the technical features of the side sill for a vehicle of the present disclosure are not limited to these directions.

Hereinafter, the X-axis illustrated in the accompanying drawings represents the width direction of the side sill for a vehicle, the Y-axis represents the length direction of the side sill for a vehicle, and the Z-axis represents the height direction of the side sill for a vehicle.

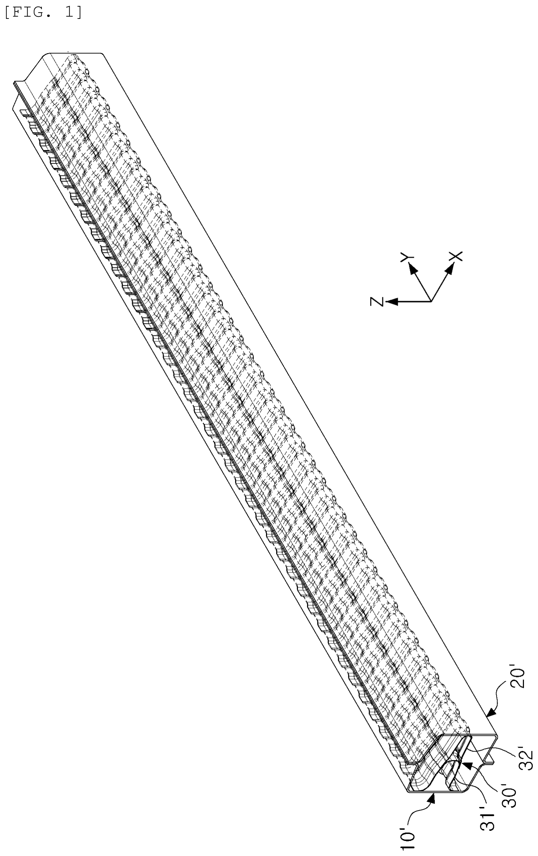

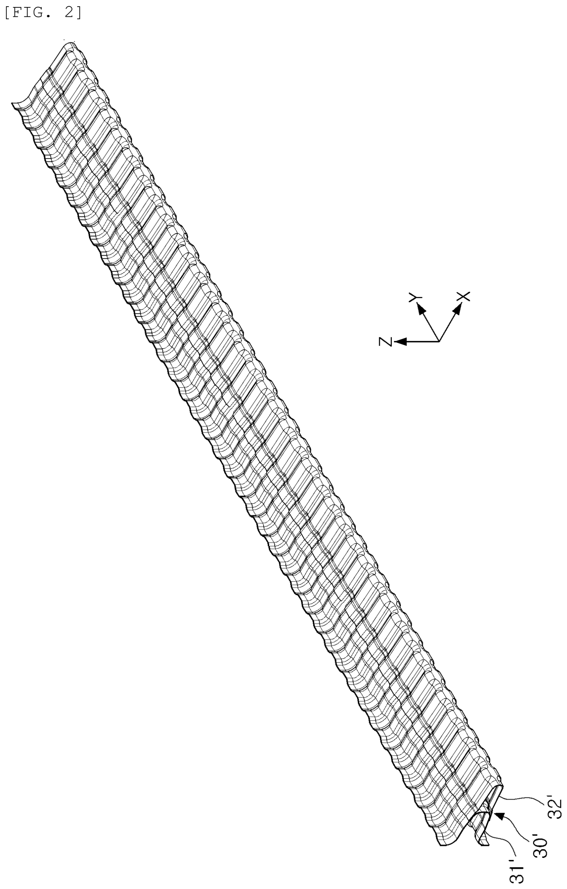

FIG. 1 is a perspective view of a side sill for a vehicle of a comparative example, compared to a side sill for a vehicle of the present disclosure. FIG. 2 is a perspective view of a reinforcing frame 30 of the side sill for a vehicle of the comparative example of FIG. 1.

In the comparative example, an inner panel 10' and an outer panel 20' are the same as those of the first embodiment, which will be described below. Unlike the first embodiment, the side sill for a vehicle of the comparative example differs in that a single reinforcing frame 30' extends in the entire length direction Y.

In the case of the same material, thickness, and cross-sectional shape, the forming load increases in proportion to the volume of divided parts. As in the first embodiment, which will be described below, when the reinforcing frame 30 is manufactured by dividing it in the length direction Y, the forming load may be reduced by the number of divisions.

For example, the reinforcing frame 30 may be divided into three parts in the length direction Y to manufacture a unit reinforcing body 30U. At this time, the forming load for forming each of the three divided unit reinforcing bodies 30U may be reduced to approximately 1/3 of the forming load when the entire undivided reinforcing frame 30' is formed as a single unit.

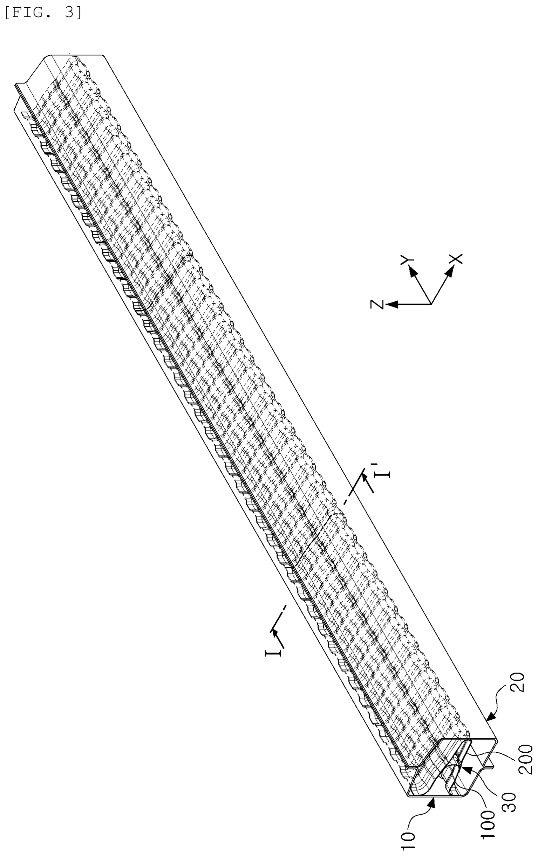

Hereinafter, components included in a side sill for a vehicle according to the first embodiment of the present disclosure will be described in detail with reference to FIGS. 3 to 6.

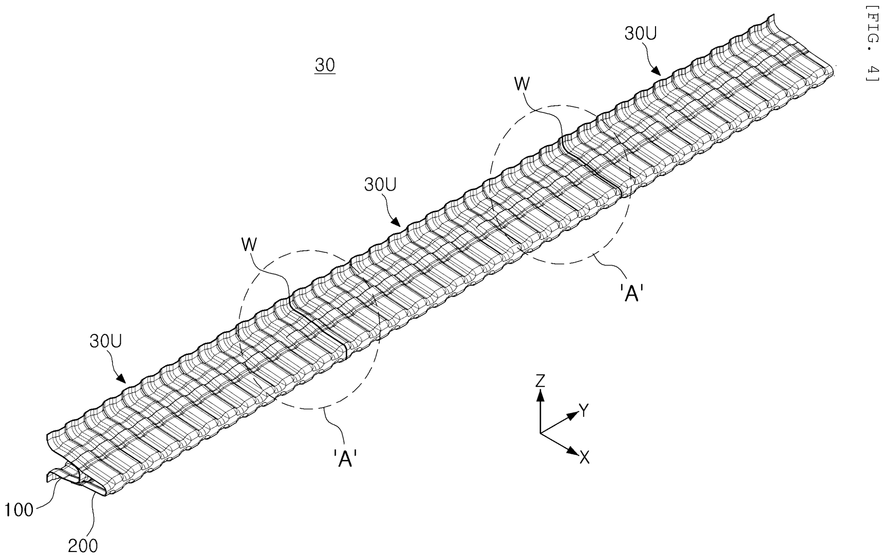

FIG. 3 is a perspective view of a side sill for a vehicle according to the first embodiment of the present disclosure, and FIG. 4 is a perspective view of the reinforcing frame 30 of the side sill for a vehicle according to the first embodiment of FIG. 3.

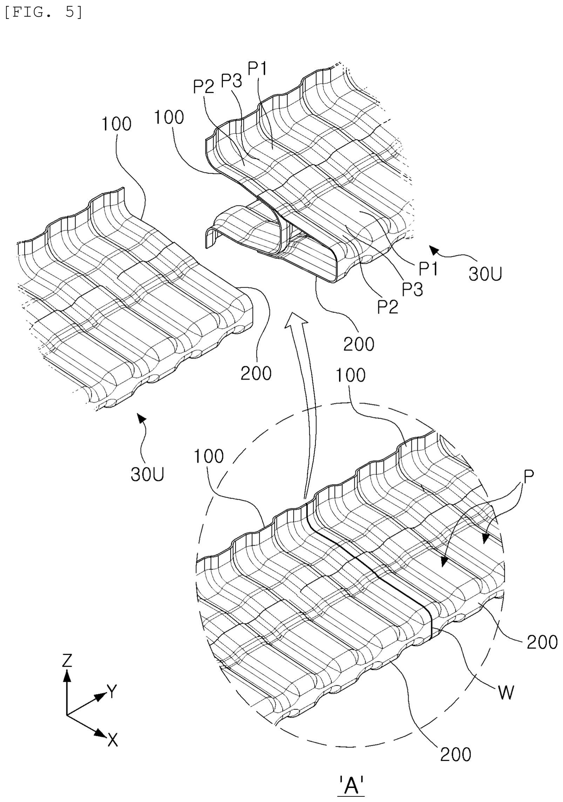

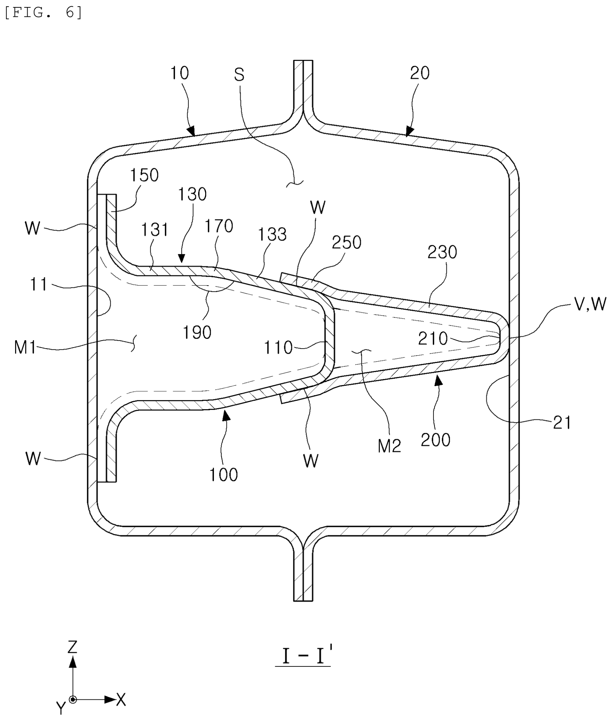

FIG. 5 is a perspective view illustrating an enlarged detail of portion 'A' of FIG. 4, and FIG. 6 is a cross-sectional view taken along the X-Z axis of FIG. 3.

A side sill for a vehicle according to an embodiment of the present disclosure may include an inner panel 10, an outer panel 20, and a reinforcing frame 30. The inner panel 10 may be disposed on the width-directional (X) inner side of the side sill in the X-axis direction.

The outer panel 20 may be joined to the inner panel 10 in the width direction X to form a hollow portion S with the inner panel 10. The outer panel 20 may be disposed on the width-directional (X) outer side of the side sill in the X-axis direction.

The inner panel 10 and the outer panel 20 may be welded together to form a welded portion W. For example, the inner panel 10 and the outer panel 20 may be joined by spot welding or the like.

The reinforcing frame 30 may be disposed in the hollow portion S, and a plurality of unit reinforcing bodies 30U having shapes corresponding to each other may be connected in the length direction Y.

The reinforcing frame 30 may have a shape in which a plurality of unit reinforcing bodies 30U correspond to each other. For example, two connected adjacent unit reinforcing bodies 30U may be welded together at length-directional (Y) end portions thereof.

Although the reinforcing frame 30 is illustrated and described herein as having three unit reinforcing bodies 30U connected in the length direction Y, the present disclosure is not necessarily limited thereto and two or three or more unit reinforcing bodies 30U may be connected in the length direction Y.

Since the unit reinforcing body 30U is shorter than the reinforcing frame 30, the unit reinforcing body 30U may be manufactured under a small forming load.

The plurality of unit reinforcing bodies 30U may have corresponding cross-sections in the X-Z axis cross-section of the side sill, and a constant unit pattern may be repeated in the length direction Y. For example, the unit reinforcing body 30U may have a constant unit pattern with repetitive uneven portion P in the length direction Y, as described below.

For example, the unit reinforcing body 30U may be manufactured of steel. When steel is applied to manufacture the unit reinforcing body 30U, capability of absorbing crash energy may become excellent, mechanical rigidity may be improved, and material costs may be remarkably reduced compared to the case of using aluminum for the unit reinforcing body 30U.

For example, a plurality of unit reinforcing bodies 30U may have corresponding shapes and the same length in the length direction Y. As another example, a plurality of unit reinforcing bodies 30U may have corresponding shapes and different lengths in the length direction Y.

The plurality of unit reinforcing bodies 30U may be welded together, forming the welded portion W. The welded portion W may be formed by spot welding, laser welding, arc welding, etc.

Of course, various joining methods, such as welding or adhesive bonding, may be applied to joining between members, such as the inner panel 10, the outer panel 20, and the unit reinforcing body 30U.

At least one of the inner panel 10, the outer panel 20, a first unit reinforcing body 100, and a second unit reinforcing body 200 may be formed of steel. For example, the inner panel 10, the outer panel 20, the first unit reinforcing body 100, and the second unit reinforcing body 200 may be formed of steel. Accordingly, the mechanical rigidity of the side sill for a vehicle may be improved.

The reinforcing frame 30 is configured by manufacturing a plurality of unit reinforcing bodies 30U divided in the length direction Y and connecting the plurality of unit reinforcing bodies 30U in the length direction Y, so that the unit reinforcing frame 30 may be manufactured by manufacturing the unit reinforcing body 30U with a lower forming load.

Furthermore, since the unit reinforcing body 30U of the side sill for a vehicle may be formed under a lower forming load, even small and medium-sized enterprises may manufacture the product, securing a variety of sales channels for the product, and improving the product salability.

Furthermore, since a plurality of the same unit reinforcing bodies 30U may be manufactured using a single mold and the unit reinforcing bodies 30U are short, the manufacturing costs, such as mold, etc. may be reduced.

The inner panel 10 may be manufactured integrally by forming a single steel plate. The inner panel 10 may be manufactured by forming a single steel plate across the entire side sill for a vehicle in the length Y direction.

Since the inner panel 10 is manufactured integrally by forming a single steel plate, the inner panel 20 composed of a single steel plate may operate as a single unit, thereby improving the mechanical rigidity of the side sill for a vehicle.

The outer panel 20 may be manufactured integrally by forming a single steel plate. The outer panel 20 may be manufactured integrally by forming a single steel plate across the entire side sill for a vehicle in the length direction Y.

Since the outer panel 20 is manufactured integrally by forming a single steel plate, the outer panel 20 composed of a single steel plate may operate as a single unit, thereby improving the mechanical rigidity of the side sill for a vehicle.

For example, the inner panel 10 and the outer panel 20 may each be formed by bending a single steel plate in multiple stages.

The unit reinforcing body 30U may be joined to the inner panel 10 to form a closed cross-section.

Since the unit reinforcing body 30U is joined to the inner panel 10 to form a closed cross-section, the crash absorption capability of the side sill for a vehicle may be improved, thereby improving the mechanical rigidity. Furthermore, while the side sill for a vehicle is constructed of steel while, a closed cross-section, which is an advantage of the aluminum extrusion method, may be easily formed.

For example, the closed cross-section formed by joining the first unit reinforcing body 100 of the unit reinforcing body 30U to the inner panel 10 may be a first closed cross-section M1, described below.

The unit reinforcing body 30U may be manufactured integrally by forming a single steel plate.

Since the unit reinforcing body 30U is manufactured integrally by forming a single steel plate, the unit reinforcing body 30U composed of a single steel plate may move integrally, thereby improving the mechanical rigidity of the side sill for a vehicle.

For example, the unit reinforcing body 30U may be manufactured using forming techniques, such as foam forming or crash forming. By applying low-cost forming techniques, such as foam forming or crash forming, the production cost of the product may be reduced.

The unit reinforcing body 30U may be manufactured by forming a single steel plate with a tensile strength of 780 MPa or greater.

Therefore, if the reinforcing frame 30 included in the side sill for a vehicle is manufactured integrally in the entire length direction Y using high-strength materials, the manufacturing of the reinforcing frame 30 requires a high forming load, making it impossible for even small and medium-sized enterprises, such as small parts manufacturers, to manufacture the product.

In the present disclosure, high-strength steel having a tensile strength of 780 MPa or more is utilized to manufacture the reinforcing frame 30 for a side sill for a vehicle to improve mechanical rigidity, and the unit reinforcing body 30U may be manufactured with a low forming load, thereby enabling the production of products even by small and medium-sized enterprises, securing a variety of sales channels for the product, and improving the product salability.

More preferably, the unit reinforcing body 30U may be manufactured by forming a single steel plate having a tensile strength of 980 MPa or greater.

The unit reinforcing body 30U may include the uneven portion P in the cross-section in the length direction Y. In the unit reinforcing body 30U, the uneven portion P may be repeated in the length direction Y.

Since the unit reinforcing body 30U includes the uneven portion P, the rigidity may be improved without increasing the thickness of the steel material constituting the unit reinforcing body 30U.

The unit reinforcing body 30U may have a repeated pattern having a constant shape, such as the uneven portion P, to be described below, in the length direction Y. A plurality of unit reinforcing bodies 30U may have cross-sections corresponding to each other on the X-Z axis and have a constant pattern repeated in the length direction Y.

The uneven portion P may have a protruding surface P1 and an indented surface P2 alternately formed in the length direction Y, and an inclined surface P3 may be formed between the protruding surface P1 and the indented surface P2.

In the reinforcing frame 30, at least one of a plurality of unit reinforcing bodies 30U connected in the length direction Y may have a different steel grade or tensile strength.

For example, the unit reinforcing body 30U disposed in the central region in the length direction Y may have a different steel grade than that of the unit reinforcing bodies 30U disposed at both end regions in the length direction Y.

For example, the unit reinforcing body 30U disposed in the central region in the length direction Y may have higher tensile strength than that of the unit reinforcing bodies 30U disposed in both end regions in the length direction Y.

In the reinforcing frame 30, two adjacent unit reinforcing bodies 30U may be welded with the length-directional (Y) end portions facing each other. The two adjacent unit reinforcing bodies 30U may have the length-directional (Y) end portions having cross-sections corresponding to each other. The unit reinforcing bodies 30U may be welded together, forming the welded portion W. The welded portion W may be formed by laser welding, arc welding, or the like.

The unit reinforcing body 30U may include the first unit reinforcing body 100 and the second unit reinforcing body 200.

One end side of the first unit reinforcing body 100 may be joined to the inner panel 10 to form the first closed cross-section M1. Accordingly, the mechanical rigidity of the side sill for a vehicle may be improved.

The first unit reinforcing body 100 may include a first upper flange 110, a pair of first web members 130, and a pair of first lower flanges 150 on the X-Z-axis cross-section of the side sill.

The first web member 130 may be connected to the first upper flange 110 at both end portions in the height direction Z. As the second lower flange 250 is joined to the first web member 130, the first upper flange 110 may be disposed at the boundary between the first closed cross-section M1 and a second closed cross-section M2.

For example, the first unit reinforcing body 100 and the inner panel 10 may be welded together, forming the welded portion W. The welded portion W may be formed by spot welding, etc.

The second unit reinforcing body 200 may be joined at one side to the first unit reinforcing body 100 to form the second closed cross-section M2. Accordingly, the mechanical rigidity of the side sill for a vehicle may be improved.

The second unit reinforcing body 200 may include a second upper flange 210, a pair of second web members 230, and a pair of second lower flanges 250 in the X-Z axis cross-section of the side sill.

The second lower flange 250 of the second unit reinforcing body 200 may be joined to the first web member 130 of the first unit reinforcing body 100.

A step may be formed between the second lower flange 250 and the second web member 230, and a distance between the pair of second lower flanges 250 in the Z-axis direction may be greater than a distance between the pair of second web members 230 in the Z-axis direction.

For example, the welded portion W may be formed as the second unit reinforcing body 200 of the reinforcing frame 30 and the outer panel 20 are joined. The welded portion W may be formed by spot welding or laser welding.

For another example, a bonded portion V may be formed as the second unit reinforcing body 200 of the reinforcing frame 30 and the outer panel 20 are joined. The bonded portion V may be formed using an adhesive.

In another example, the second unit reinforcing body 200 of the reinforcing frame 30 and the outer panel 20 may not be joined.

For example, the first unit reinforcing body 100 and the second unit reinforcing body 200 may be welded together, forming the welded portion W. The welded portion W may be formed by spot welding or laser welding.

The protruding surface P1 of the first unit reinforcing body 100 may overlap the protruding surface P1 of the second unit reinforcing body 200, and the indented surface P2 of the first unit reinforcing body 100 may overlap the indented surface P2 of the second unit reinforcing body 200.

As the protruding surfaces P1 of the first unit reinforcing body 100 and the second unit reinforcing body 200 overlap each other and the indented surfaces P2 of the first unit reinforcing body 100 and the second unit reinforcing body 200 overlap each other, the bonding strength between the first unit reinforcing body 100 and the second unit reinforcing body 200 may be improved, and since a bonding position between the first unit reinforcing body 100 and the second unit reinforcing body 200 may be naturally guided, workability of a worker may be improved.

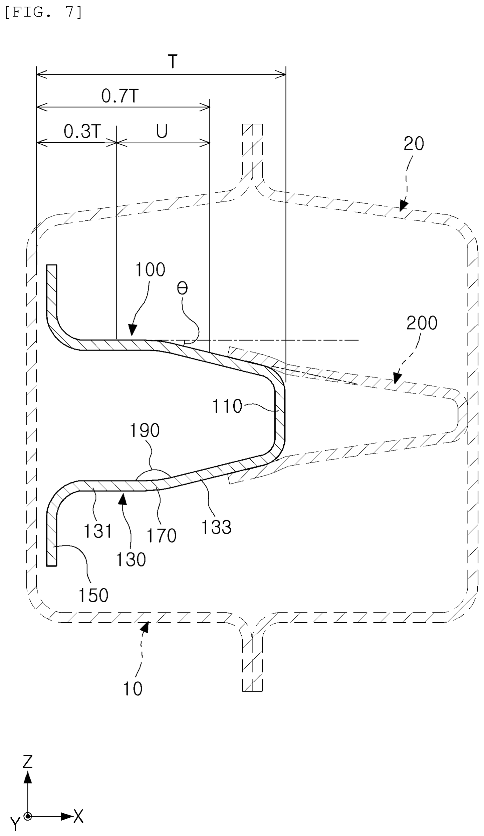

FIG. 7 is a drawing illustrating a position U of a bending point 170 of the side sill for a vehicle according to the first embodiment of FIG. 3.

The first unit reinforcing body 100 may have the bending point 170 protruding outwardly from the first closed cross-section M1.

In the first unit reinforcing body 100, the position U of the bending point 170 may be formed at a position spaced apart from the first inner surface 11 of the inner panel 10 by a distance of 30 to 70% of an installation width T of the first unit reinforcing body 100.

Since the first unit reinforcing body 100 is formed at the position spaced apart by the distance of 30 to 70% of the installation width T of the first unit reinforcing body 100, bending may be effectively induced at the bending point 170, thereby allowing normal crushing and achieving sufficient load performance.

On the other hand, if the bending point 170 is formed at less than 30% or more than 70% of the installation width T of the first unit reinforcing body 100 from the first inner surface 11 of the inner panel 10, bending may not be properly induced at the bending point 170 of the first unit reinforcing body 100 and normal crushing may not occur.

If normal crushing does not occur in the first unit reinforcing body 100, the first unit reinforcing body 100 may tilt and be deformed and sufficient load performance may not be achieved. Furthermore, this may pose a significant risk to the side sill for a vehicle to exhibit stable crash energy absorption performance under various crash conditions.

The first unit reinforcing body 100 may include a first section 131 and a second section 133.

The first section 131 may extend toward the first inner surface 11 of the inner panel 10 with the bending point 170 as the boundary.

The second section 133 may be bent from the bending point 170 as a boundary and extend toward the second inner surface 21 of the outer panel 20 and may form a bending angle 190 with the first section 131 within the first closed cross-section M1.

The bending point 170 may be located at the boundary between the first section 131 and the second section 133.

The first unit reinforcing body 100 may have the first section 131 and the second section 133 bent based on the bending point 170 as the boundary.

The bending angle 190 may be formed within the first closed cross-section M1 and may be less than 180 degrees.

The first unit reinforcing body 100 has the bending angle 190 formed within the first closed cross-section M1 and ranging from 165 to 175 degrees. The angle (θ) formed by an extension line of the first section 131 and an extension line of the second section 133 may range from 5 to 15 degrees.

The bending angle 190 may be formed within the first closed cross-section M1 as the first section 131 and the second section 133 are bent based on the bending point 170.

As the first unit reinforcing body 100 has the bending angle 190 ranging from 165 to 175 degrees, sufficient rigidity of the first unit reinforcing body 100 may be secured and bending may be stably induced at the bending point 170.

If the bending angle 190 of the first unit reinforcing body 100 is less than 165 degrees, bending may be easily induced at the bending point 170, but, this ease of bending induction at the bending point 170 of the first unit reinforcement 100 may lead to the problem that the first unit reinforcement 100 may be bent at the bending point 170 before exhibiting the designed load performance, potentially degrading the load performance.

A problem may occur in which the first unit reinforcement member 100 fails to undergo normal crushing and instead experiences a tilting deformation, which prevents it from exhibiting sufficient load performance. Furthermore, this may pose a significant risk for the side sill for a vehicle to exhibit stable crash energy absorption performance under various crash environments.

If the bending angle 190 exceeds 175 degrees, bending induction at the bending point 170 may not occur properly, preventing normal crushing.

A problem may occur in which the first unit reinforcement member 100 fails to undergo normal crushing and instead experiences a tilting deformation, which prevents it from exhibiting design load performance.

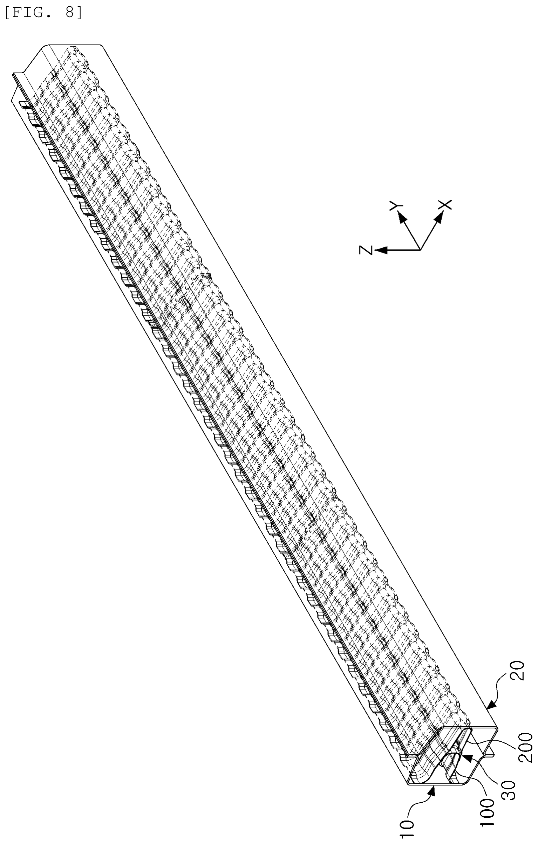

Hereinafter, components included in the side sill for a vehicle according to second and third embodiments of the present disclosure will be described in detail with reference to FIGS. 8 to 16.

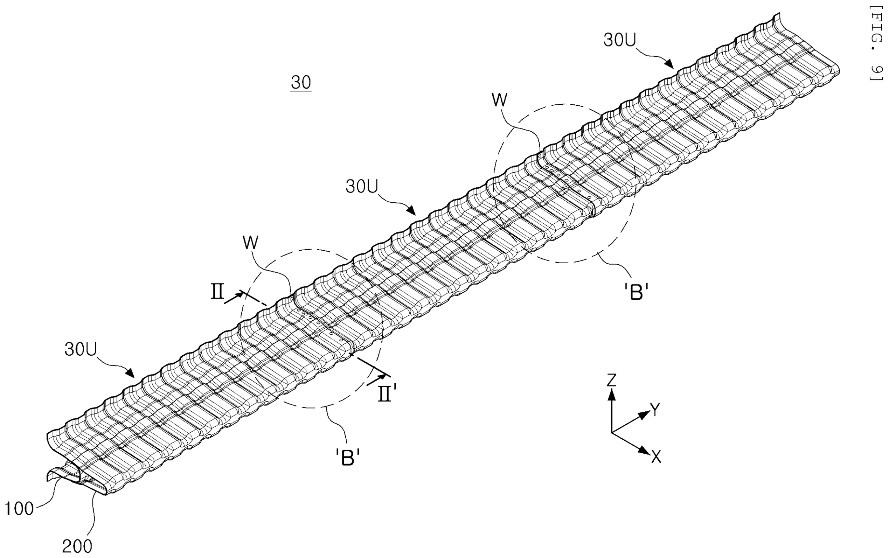

FIG. 8 is a perspective view of a side sill for a vehicle according to the second embodiment of the present disclosure. FIG. 9 is a perspective view of a reinforcing frame of a side sill for a vehicle according to the second embodiment of FIG. 8.

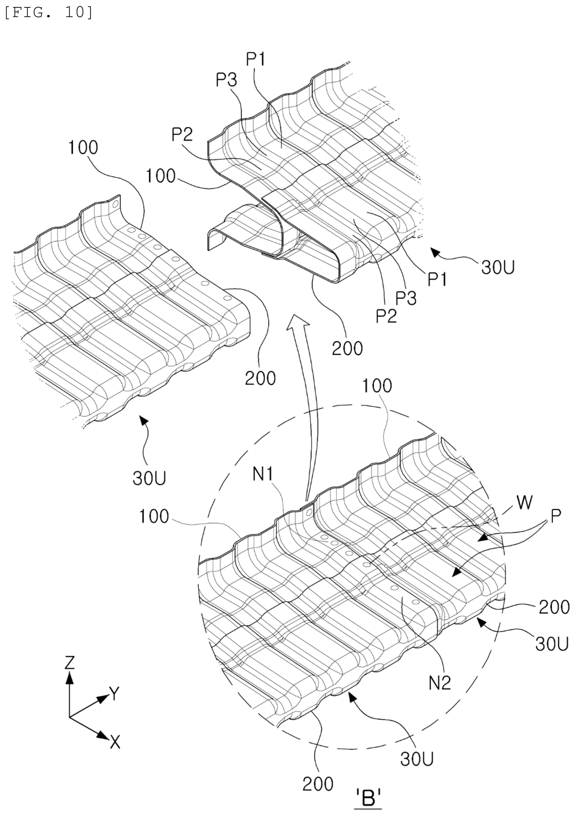

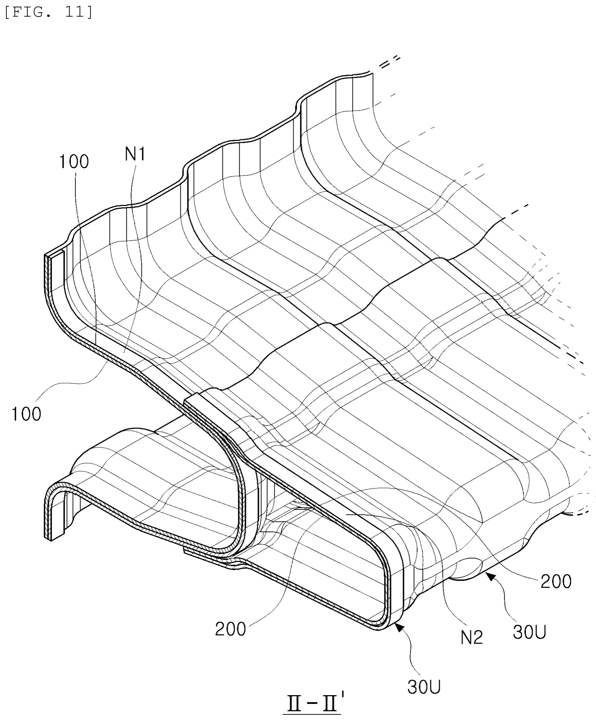

FIG. 10 is a perspective view illustrating an enlarged detail of portion 'B' of FIG. 9. FIG. 11 is a cross-sectional view taken along line II-II' of FIG. 9.

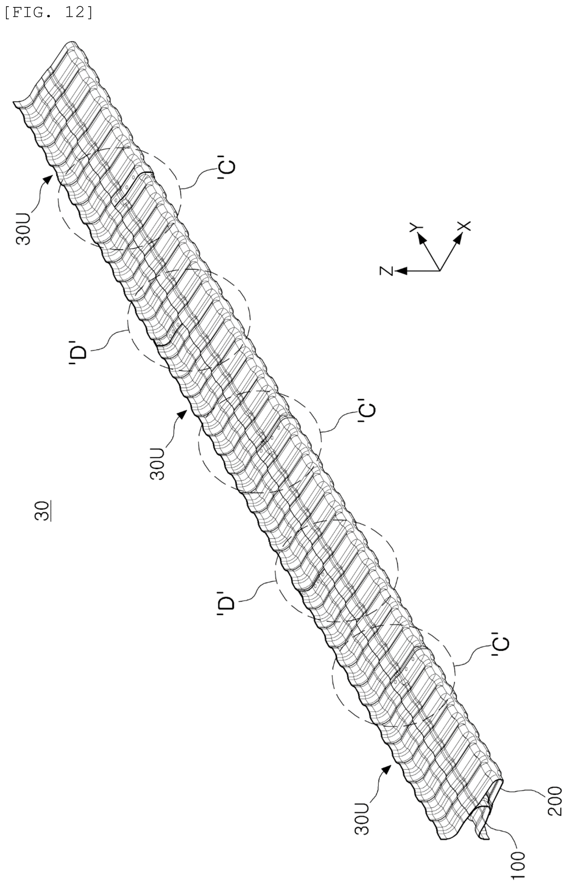

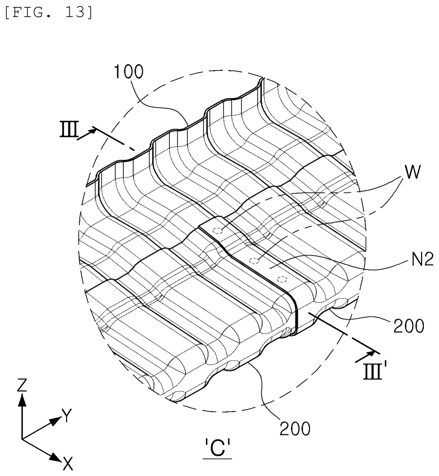

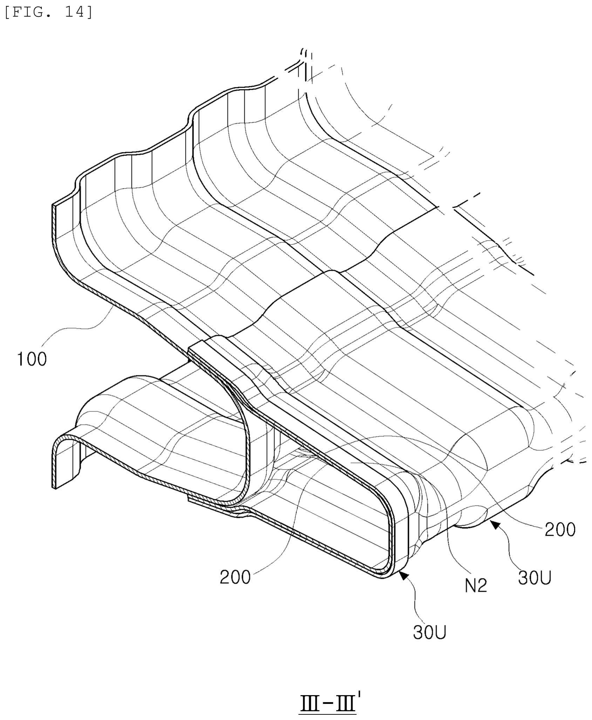

FIG. 12 is a perspective view of a reinforcing frame of a side sill for a vehicle included in a third embodiment of the present disclosure. FIG. 13 is a perspective view illustrating an enlarged detail of portion 'C' of FIG. 12. FIG. 14 is a cross-sectional view taken along line III-III' of FIG. 13.

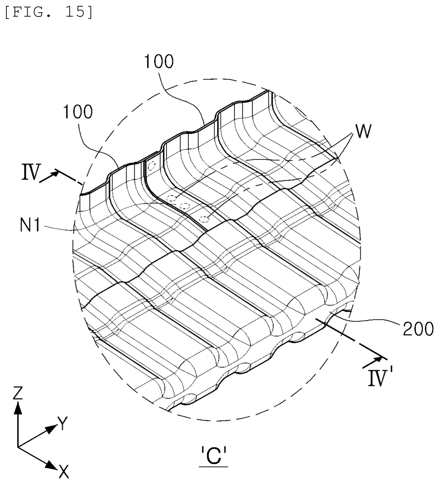

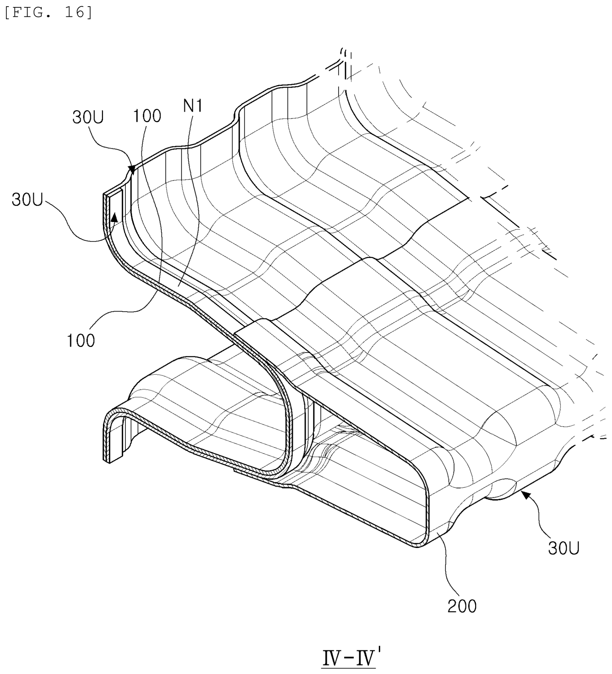

FIG. 15 is a perspective view illustrating an enlarged detail of portion 'D' of FIG. 12. FIG. 16 is a cross-sectional view taken along line IV-IV' of FIG. 15.

Two unit reinforcing bodies 30U of the side sill for a vehicle connected in the length direction according to the first embodiment of the present disclosure are welded together with their longitudinal end portions facing each other.

On the other hand, the side sill for a vehicle according to the second and third embodiments of the present disclosure differs only in that a lap welding joint method, to be described below, is applied instead of a butt welding joint method of the first embodiment, and the other components of the second and third embodiments are the same as those of the side sill for a vehicle of the first embodiment described above.

Therefore, to avoid duplication of the contents, a detailed description thereof will be omitted. However, it should be understood that various examples of the components common to the first embodiment described above may be applied to the second and third embodiments.

In the reinforcing frame, two unit reinforcing bodies 30U connected in the length direction may have an overlapping region in the thickness direction and may be welded together in the overlapping region.

The overlapping unit reinforcing bodies 30U may be manufactured with their cross-sectional dimensions partially adjusted to facilitate overlapping in the overlapping region. Accordingly, the two unit reinforcing bodies 30U connected in the length direction may overlap each other in the thickness direction.

The two unit reinforcing bodies 30U connected in the length direction may have the overlapping region as one unit reinforcing body 30U is inserted into the other unit reinforcing body 30U in the length direction. The cross-section of the unit reinforcing body 30U inserted inwardly in the overlapping region may be manufactured to be smaller than the cross-section of the unit reinforcing body 30U disposed outwardly.

Therefore, two adjacent unit reinforcing bodies 30U may overlap each other in the thickness direction in the overlapping region, and the two adjacent unit reinforcing bodies 30U may be joined in the overlapping region by the lap welding joint method. The unit reinforcing bodies 30U may be welded together, forming the welded portion W. The welded portion W may be formed by spot welding or laser welding.

Referring to FIGS. 8 to 11, in the side sill for a vehicle according to the second embodiment of the present disclosure, the unit reinforcing body 30U may include the first unit reinforcing body 100 and the second unit reinforcing body 200 described above. The reinforcing frame may include a first overlapping region N1 and a second overlapping region N2.

In the first overlapping region N1, two first unit reinforcing bodies 100 connected in the length direction may overlap in the thickness direction. In the second overlapping region N2, two second unit reinforcing bodies 200 connected in the length direction may overlap in the thickness direction.

The first overlapping region N1 and the second overlapping region N2 may be disposed at positions corresponding to each other in the length direction.

At least portions of the first overlapping region N1 and the second overlapping region N2 may overlap each other.

In the portion in which the first overlapping region N1 and the second overlapping region N2 overlap each other, the two first unit reinforcing bodies 100 in the first overlapping region N1 and the two second unit reinforcing bodies 200 in the second overlapping region N2 may be welded together in a four-layered state.

In the portion in which the first overlapping region N1 and the second overlapping region N2 do not overlap, the two first unit reinforcing bodies 100 connected in the length direction in the first overlapping region N1 may be welded together in a two-layered state.

In the portion in which the first overlapping region N1 and the second overlapping region N2 do not overlap, the two second unit reinforcing bodies 200 connected in the length direction in the second overlapping region N2 may be welded together in a two-layered state.

Referring to FIGS. 12 to 16, in the side sill for a vehicle according to the third embodiment of the present disclosure, the unit reinforcing body 30U may include the first unit reinforcing body 100 and the second unit reinforcing body 200 described above. The reinforcing frame may include the first overlapping region N1 and the second overlapping region N2 described above. The first overlapping region N1 and the second overlapping region N2 may be arranged to stagger in the length direction.

The second unit reinforcing body 200 may be installed to overlap and cover at least a portion of the first overlapping region N1.

In a portion in which the second unit reinforcing body 200 overlaps the first overlapping region N1, two first unit reinforcing bodies 100 and one second unit reinforcing body 200 of the first overlapping region N1 may be welded together in a three-layered state.

The second overlapping region N2 may be installed to cover a portion of the first unit reinforcing body 100. In a portion in which the second overlapping region N2 overlaps the first unit reinforcing body 100, two second unit reinforcing bodies 200 and the first unit reinforcing body 100 of the second overlapping region N2 may be welded together in a three-layered state.

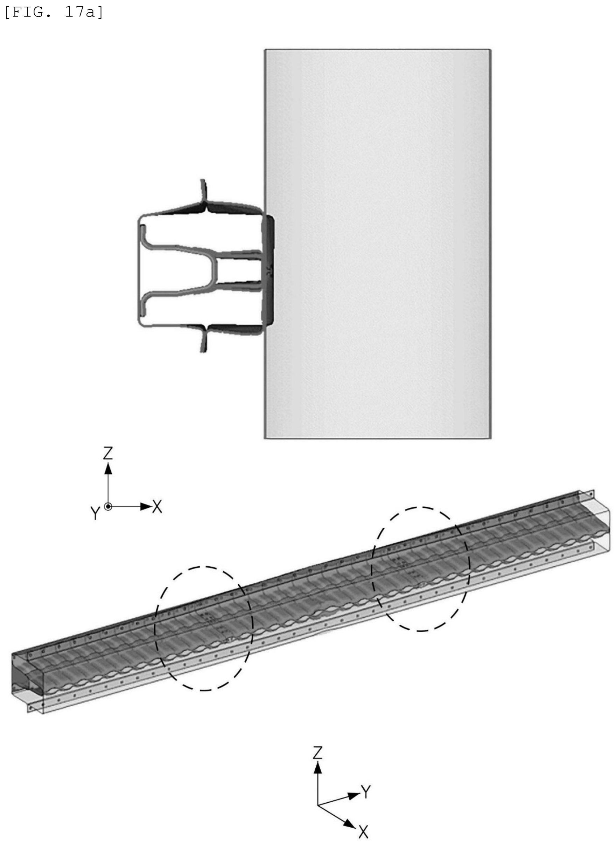

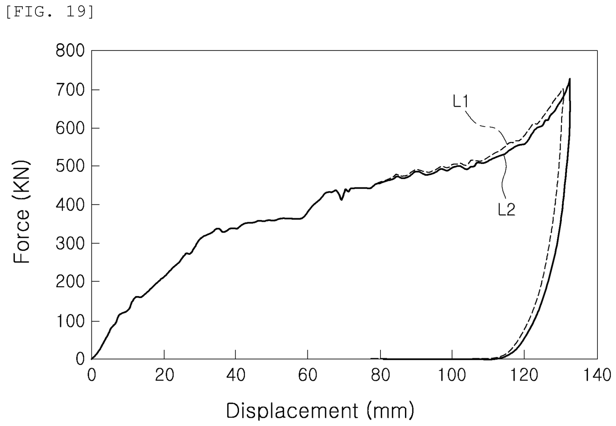

Hereinafter, the deformation analysis results of the side sill for a vehicle of the second embodiment and a side sill for a vehicle of a comparative example will be described with reference to FIGS. 17a through 18c. The crash performance of the side sill for a vehicle of the second embodiment and the side sill for a vehicle of the comparative example will be compared with reference to FIG. 19.

Among the side sills for a vehicles according to the first through third embodiments of the present disclosure, the second embodiment and the comparative example are compared as representative examples.

In the side sill for a vehicle of the second embodiment, the reinforcing frame 30 is formed by connecting a plurality of unit reinforcing bodies 30U having corresponding shapes in the length direction Y, while the side sill for a vehicle of the comparative example differs in that a single reinforcing frame 30' extends in the length direction Y.

This is to examine whether the side sill for a vehicle of the second embodiment, when configured by connecting a plurality of unit reinforcing bodies 30U in the length direction Y to form a reinforcing frame 30, exhibits differences in deformation analysis results and crash performance, compared to the side sill for a vehicle of the comparative example.

First, the deformation analysis results of the side sill for a vehicle of the second embodiment and the side sill for a vehicle of the comparative example will be described with reference to FIGS. 17a to 18c.

FIGS. 17a to 17c illustrate the deformation analysis results of the side sill for a vehicle of the second embodiment.

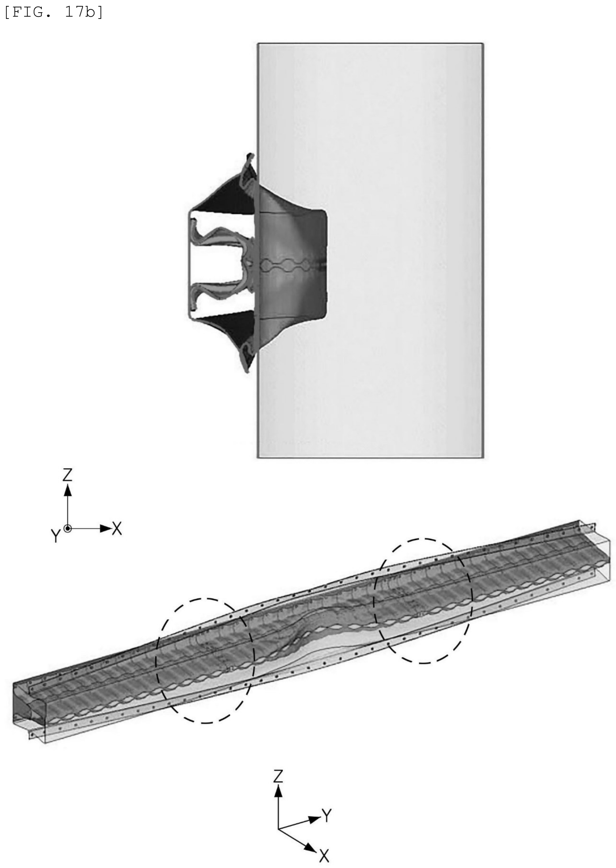

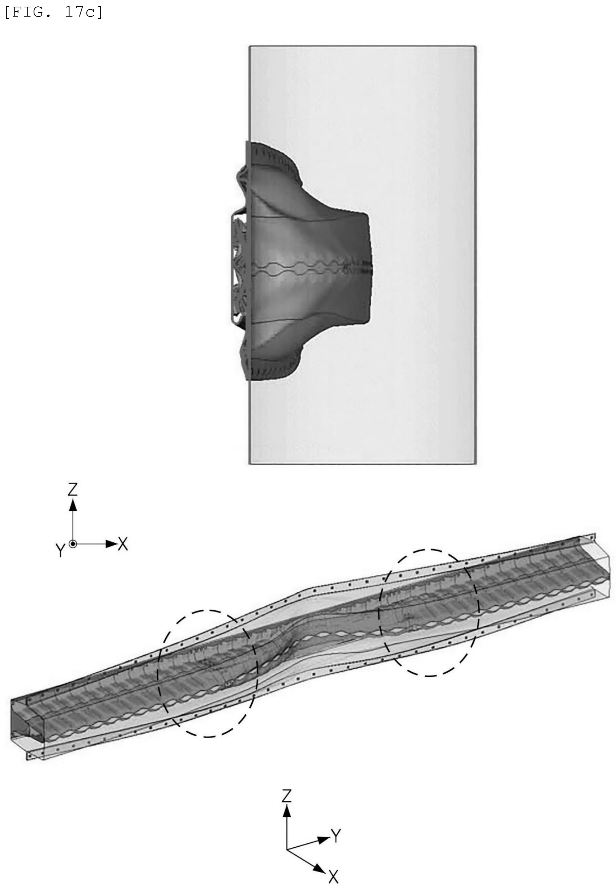

FIG. 17a illustrates the deformation analysis results at an early stage of the crash of the second embodiment, FIG. 17b illustrates the deformation analysis results at a mid-stage of the crash of the second embodiment, and FIG. 17c illustrates the deformation analysis results at a late stage of the crash of the second embodiment.

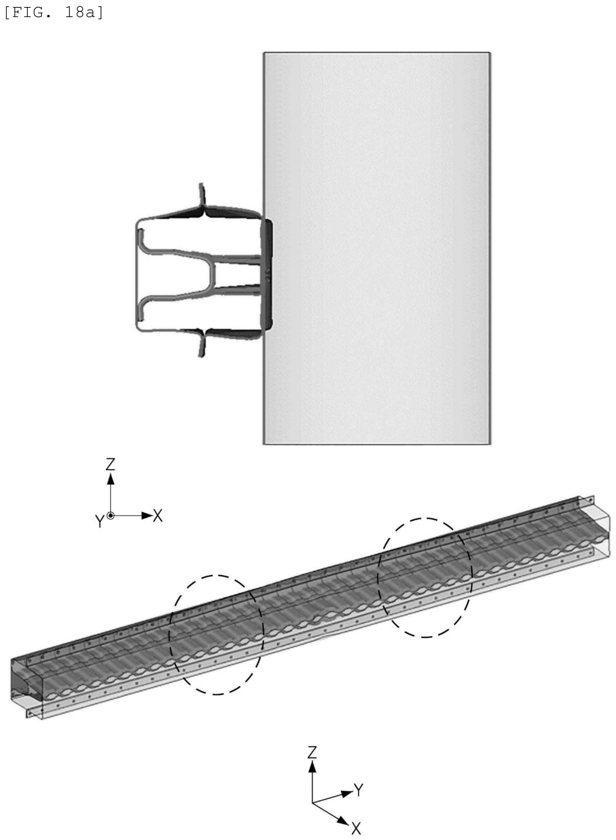

FIGS. 18a to 18c illustrate the deformation analysis results of the side sill of the vehicle of the comparative example.

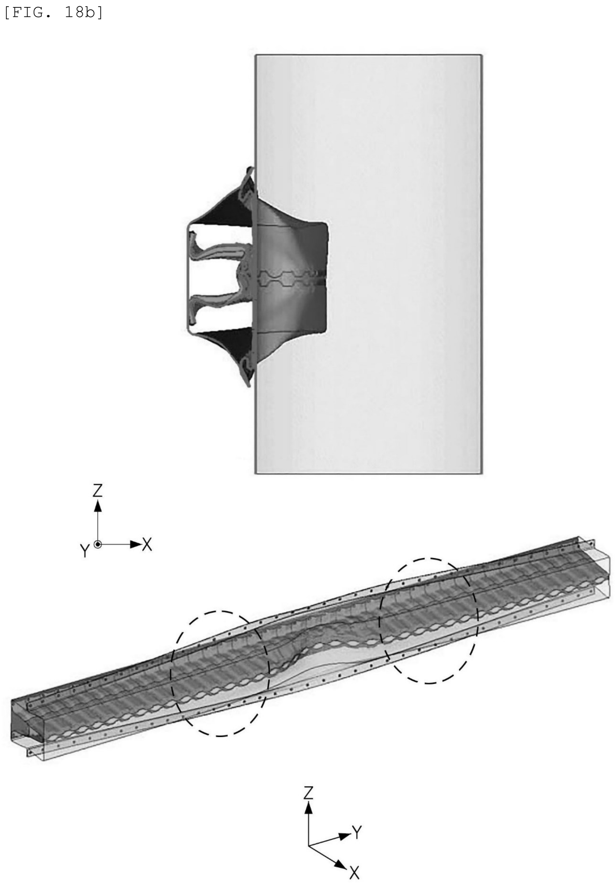

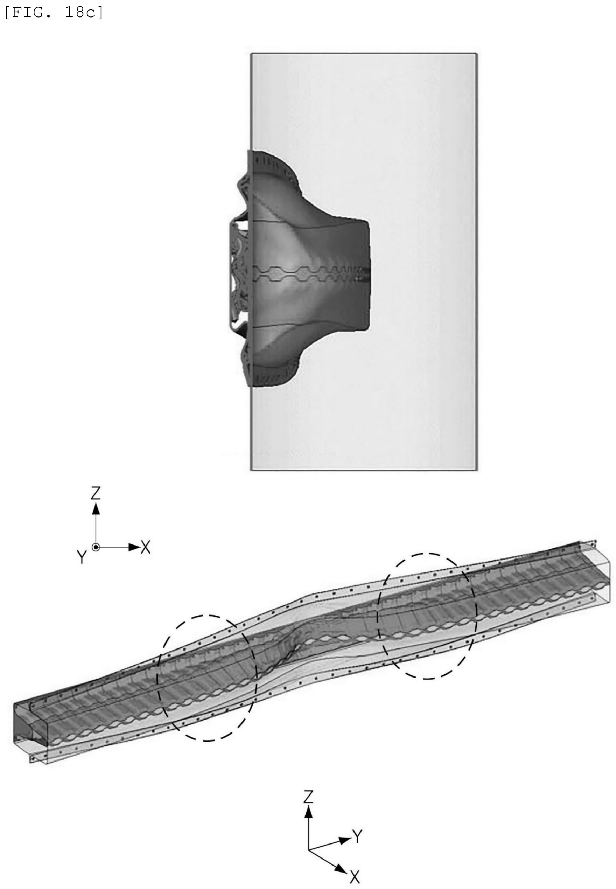

FIG. 18a illustrates the deformation analysis results at an early stage of the crash for the comparative example, FIG. 18b illustrates the deformation analysis results at a mid-stage of the crash for the comparative example, and FIG. 18c illustrates the deformation analysis results at a late stage of the crash for the comparative example.

Referring to FIGS. 17a and 18c, it may be confirmed that the second embodiment and the comparative example exhibited similar, stable crash deformations at the early, mid, and late stages of the crash.

Next, the crash performance of the side sill for a vehicle of the comparative example and the side sill for a vehicle of the second embodiment will be compared and explained with reference to FIG. 19.

FIG. 19 is a load-displacement diagram of the side sill for a vehicle of the comparative example of FIG. 1 and the side sill for a vehicle of the second embodiment of FIG. 8

A load-displacement value of the side sill for a vehicle of the comparative example of FIG. 1 is represented by a first value L1, and a load-displacement value of the side sill for a vehicle of the second embodiment of FIG. 8 is represented by a second value L2.

Referring to the first value L₁ and the second value L₂, the displacements of the side sill for a vehicle of the second embodiment of FIG. 8 and the side sill for a vehicle of the comparative example of FIG. 1 are nearly similar under the same load.

Comparing the first value L1 with the second value L2 reveals that the second embodiment and the comparative example absorb impact stably and similarly at the later stage of crash.

Specifically, the internal energy of the side sill for a vehicle of the comparative example was 51.2 kJ and the weight of the side sill for a vehicle of the comparative example was 18.8 kg. The internal energy of the side sill for a vehicle of the second embodiment was 51.9 kJ, and the weight of the side sill for a vehicle of the second embodiment was 19.0 kg.

That is, the ratio of the internal energy per 1 kg of the side sill for a vehicle of the comparative example was 2.72 (kJ/kg), while the ratio of the internal energy per 1 kg of the side sill for a vehicle of the second embodiment was 2.73 (kJ/kg), and thus, it can be seen that the side sill for a vehicle of the second embodiment and the side sill for a vehicle of the comparative example have nearly similar ratios of the internal energy per 1 kg and similar energy absorption performance per unit weight.

Therefore, the side sill for a vehicle of the second embodiment of the present disclosure may be formed under small forming loads, while maintaining stable crash performance.

Furthermore, although not specifically illustrated in the drawings, it was confirmed that the side sills for a vehicles according to the first and third embodiments of the present disclosure achieved similar performance to the side sill for a vehicle according to the second embodiment of the present disclosure.

Next, the operations involved in a method for manufacturing a side sill for a vehicle according to an embodiment of the present disclosure will be described in detail.

The method for manufacturing a side sill for a vehicle according to an embodiment of the present disclosure may include a component preparation operation, a reinforcing frame 30 manufacturing operation, a reinforcing frame 30 joining operation, and an outer panel 20 joining operation.

In the component preparation operation, the inner panel 10, a plurality of unit reinforcing bodies 30U, and the outer panel 20 may be prepared.

In the reinforcing frame 30 manufacturing operation, the reinforcing frame 30 may be manufactured by connecting a plurality of unit reinforcing bodies 30U in the length direction Y. In the reinforcing frame 30, the plurality of unit reinforcing bodies 30U having corresponding shapes may be connected in the length direction Y. The plurality of unit reinforcing bodies 30U may be welded together, forming the welded portion W.

The reinforcing frame 30 may include the plurality of unit reinforcing bodies 30U having corresponding shapes. For example, in the reinforcing frame 30, two adjacent unit reinforcing bodies 30U may be welded with the length-directional (Y) end portions facing each other. The two adjacent unit reinforcing bodies 30U may have the length-directional (Y) end portions having cross-sections corresponding to each other. The unit reinforcing bodies 30U may be welded together, forming the welded portion W. The welded portion W may be formed by laser welding, arc welding, or the like.

For example, the first unit reinforcing body 100 and the second unit reinforcing body 200 may be welded together, forming the welded portion W. The welded portion W may be formed by spot welding or laser welding.

In the reinforcing frame 30 joining operation, the reinforcing frame 30 may be joined to the inner panel 10. The reinforcing frame 30 and the unit reinforcing body 30U may be joined to the inner panel 10 to form a closed cross-section.

The reinforcing frame 30 and the inner panel 10 may be welded together, forming the welded portion W. The welded portion W may be formed by spot welding or the like. Specifically, the first unit reinforcing body 100 and the inner panel 10 of the reinforcing frame 30 may be welded together, forming the welded portion W.

In the outer panel 20 joining operation, the outer panel 20 may be joined to the inner panel 10 to form the hollow portion S, and the reinforcing frame 30 may be disposed within the hollow portion S.

The inner panel 10 and the outer panel 20 may be welded together, forming the welded portion W. For example, the inner panel 10 and the outer panel 20 may be joined by spot welding or the like.

The outer panel 20 may or may not be joined to the second unit reinforcing body 200 of the reinforcing frame 30.

For example, the second unit reinforcing body 200 of the reinforcing frame 30 and the outer panel 20 may be joined, forming the welded portion W. The welded portion W may be formed by spot welding or laser welding.

In another example, the second unit reinforcing body 200 of the reinforcing frame 30 and the outer panel 20 may be joined, forming the bonded portion V. The bonded portion V may be formed using an adhesive.

In another example, the second unit reinforcing body 200 and the outer panel 20 may not be joined.

Furthermore, various examples of the side sill for a vehicle described above may be applied to the method for manufacturing a side sill for a vehicle according to the present disclosure.

Therefore, the components of the inner panel 10, the outer panel 20, the reinforcing frame 30, and the unit reinforcing body 30U of the side sill for a vehicle utilized in the method for manufacturing a side sill for a vehicle are the same as those of the side sill for a vehicle as described above, and thus, a detailed description thereof will be omitted to avoid redundancy.

The method for manufacturing a side sill for a vehicle is provided as an exemplary preferred manufacturing method to enable a person having ordinary skill in the art to easily practice the present disclosure. This method may be modified to follow a different order from that described above or include other auxiliary processes depending on specific field conditions.

While embodiments have been shown and described above, it will be apparent to those skilled in the art that modifications and variations could be made without departing from the scope of the present disclosure as defined by the appended claims.

**[Description of Reference Characters]**

| | | | |
|---|---|---|---|
| 10, | 10': Inner panel | 11: | First inner surface |
| 20, 20': | Outer panel | 21: | Second inner surface |
| 30, | 30': Reinforcing frame | 30U: | Unit reinforcing body |
| 31': | First reinforcing frame | 32': | Second reinforcing frame |
| 100: | First unit reinforcing body | 110: | First upper flange |
| 130: | First web member | 131: | First section |
| 133: | Second section | 150: | First lower flange |
| 170: | Bending point | 190: | Bending angle |
| 200: | Second unit reinforcing body | 210: | Second |
| upper flange | | | |
| 230: | Second web member | 250: | Second lower flange |
| N1: | First overlapping region | N2: | Second overlapping region |
| M1: | First closed cross-section | M2: | Second closed cross-section |
| P: | Uneven portion | P1: | Protruding surface |
| P2: | Indented surface | P3: | Inclined surface |
| S: | Hollow portion | T: | Installation width of first unit reinforcing body |
| U: | Position of bending point | V: | Bonded portion |
| W: | Welded portion | X: | Width direction |
| Y: | Length direction | Z: | Height direction |

## Claims

1. A side sill for a vehicle, the side sill comprising:
an inner panel;
an outer panel joined to the inner panel in a width direction to form a hollow portion together with the inner panel; and
a reinforcing frame disposed in the hollow portion and in which a plurality of unit reinforcing bodies having corresponding shapes are connected in a length direction.

2. The side sill of claim 1, wherein the unit reinforcing body is joined to the inner panel to form a closed cross-section.

3. The side sill of claim 1, wherein the unit reinforcing body is manufactured integrally by forming a single steel plate.

4. The side sill of claim 1, wherein the unit reinforcing body is manufactured by forming a single steel plate having tensile strength of 780 MPa or more.

5. The side sill of claim 1, wherein the unit reinforcing body includes an uneven portion in a length-directional cross-section.

6. The side sill of claim 5, wherein the uneven portion has a protruding surface and an indented surface alternately formed in the length direction, and an inclined surface is formed between the protruding surface and the indented surface.

7. The side sill of claim 1, wherein at least one of the plurality of unit reinforcing bodies of the reinforcing frame connected in the length direction has a different steel grade or tensile strength.

8. The side sill of claim 1, wherein two unit reinforcing bodies connected in the length direction in the reinforcing frame are welded with length-directional end portions facing each other.

9. The side sill of claim 1, wherein the reinforcing frame has an overlapping region in which two unit reinforcing bodies connected in the length direction overlap each other in a thickness direction and are welded in the overlapping region.

10. The side sill of claim 9, wherein
the unit reinforcing body includes:
a first unit reinforcing body having one side joined to the inner panel to form a first closed cross-section; and
a second unit reinforcing body having one side joined to the first unit reinforcing body to form a second closed cross-section,
the reinforcing frame includes:
a first overlapping region in which two first unit reinforcing bodies connected in the length direction overlap in the thickness direction; and
a second overlapping region in which two second unit reinforcing bodies connected in the length direction overlap in the thickness direction, and
the first overlapping region and the second overlapping region are disposed at positions corresponding to each other in the length direction.

11. The side sill of claim 10, wherein, in a portion in which the first overlapping region and the second overlapping region overlap, the two first unit reinforcing bodies of the first overlapping region and the two second unit reinforcing bodies of the second overlapping region are welded in a four-layered state.

12. The side sill of claim 9, wherein
the unit reinforcing body includes:
a first unit reinforcing body having one side joined to the inner panel to form a first closed cross-section; and
a second unit reinforcing body having one side joined to the first unit reinforcing body to form a second closed cross-section,
the reinforcing frame includes:
a first overlapping region in which two first unit reinforcing bodies connected in the length direction overlap in the thickness direction; and
a second overlapping region in which two second unit reinforcing bodies connected in the length direction overlap in the thickness direction, and
the first overlapping region and the second overlapping region are disposed to stagger in the length direction.

13. The side sill of claim 12, wherein, in a portion in which the second unit reinforcing body overlaps the first overlapping region, two first unit reinforcing bodies and one second unit reinforcing body in the first overlapping region are welded in a three-layered state.

14. The side sill of claim 12, wherein
in a portion in which the second overlapping region overlaps the first unit reinforcing body, two second unit reinforcing bodies and the first unit reinforcing body in the second overlapping region are welded in a three-layered state.

15. The side sill of claim 1, wherein
the unit reinforcing body includes:
a first unit reinforcing body having one side joined to the inner panel to form a first closed cross-section; and
a second unit reinforcing body having one side joined to the first unit reinforcing body to form a second closed cross-section, and
the first unit reinforcing body has a bending point protruding outwardly from the first closed cross-section.

16. The side sill of claim 15, wherein the bending point of the first unit reinforcing body is formed at a position spaced apart from a first inner surface of the inner panel by a distance of 30 to 70% of an installation width of the first unit reinforcing body.

17. The side sill of claim 15, wherein
the first unit reinforcing body includes:
a first section extending toward a first inner surface of the inner panel with the bending point as a boundary; and
a second section bent based on the bending point as a boundary to extend toward a second inner surface of the outer panel and forming a bending angle with the first section within the first closed cross-section, and
the bending angle in the first unit reinforcing body is formed within the first closed cross-section and is in the range of 165 to 175 degrees.

18. The side sill of claim 1, wherein the inner panel is manufactured integrally by forming a single steel plate.

19. The side sill of claim 1, wherein the outer panel is manufactured integrally by forming a single steel plate.

20. A method for manufacturing a side sill for a vehicle, the method comprising:
a component preparation operation of preparing an inner panel, a plurality of unit reinforcing bodies, and an outer panel;
a reinforcing frame manufacturing operation of manufacturing a reinforcing frame by connecting the plurality of unit reinforcing bodies in a length direction;
a reinforcing frame joining operation of joining the reinforcing frame to the inner panel; and
an outer panel joining operation of joining the outer panel to the inner panel to form a hollow portion and disposing the reinforcing frame within the hollow portion.
